# EUROPEAN PATENT APPLICATION

(11) **EP 2 395 469 A1**
(43) Date of publication of application: **14.12.2011**
(21) Application number: 11169700.9
(22) Date of filing: 13.06.2011
(51) Int. Cl.: G06Q 30/00

(54) **Digital voucher distribution system**

(30) Priority: 14.06.2010 EP 10305631
(71) Applicant: Accenture Global Services Limited, Dublin 4 (IE)
(72) Inventor: Hasson, Robert, 06600 Antibes (FR)
(74) Representative: de Beaumont, Michel

(57) **Abstract**

The invention concerns a method of distributing one or more digital vouchers to the communications device of a user comprising: identifying, based on a user input to the communications device (106), a plurality of digital vouchers; displaying on a display of said communications device an advertising link to each of said plurality of digital vouchers; and in response to a selection by said user of one or more of said advertising links, transmitting one or more digital vouchers corresponding to said selected links to said communications device.

## Description

### TECHNICAL FIELD OF THE INVENTION

The present disclosure relates to methods and systems for distributing digital vouchers, and in particular to methods and systems for distributing digital vouchers to mobile devices.

### BACKGROUND

Paper vouchers or coupons are often issued by merchants in order to entice consumers, for example by offering a gift payment, discounts, or rebates that can be used by the consumer when purchasing products or services.

It has been proposed to replace paper vouchers or coupons by electronic vouchers. Thus, whereas a paper voucher must be printed by a consumer or physically transmitted or handed to a consumer, for example via a postal service, an electronic voucher may be electronically transmitted to the mobile device of the consumer, thereby facilitating voucher distribution. Furthermore, the voucher may be applied to a purchase in a simple fashion at a point of sale of the merchant, when the consumer presents their mobile device.

However, there are technical problems associated with the transmission of digital vouchers to consumer's mobile devices. In particular, consumers generally do not wish to be inundated with unwanted advertising material, such as vouchers, and are unlikely to be able to keep track of the vouchers that have been sent to them for later use. Furthermore, the transmission of voucher data is consuming in terms of network bandwidth. Thus there is a need for an improved method and system for distributing digital vouchers.

### SUMMARY OF THE PRESENT DISCLOSURE

It is an aim of embodiments of the present disclosure to at least partially address one or more needs in the prior art.

According to one aspect of the present disclosure, there is provided a method of distributing one or more digital vouchers to the communications device of a user comprising: identifying, based on a user input to the communications device, a plurality of digital vouchers; displaying on a display of said communications device an advertising link to each of said plurality of digital vouchers; and in response to a selection by said user of one or more of said advertising links, transmitting one or more digital vouchers corresponding to said selected links to said communications device.

According to one embodiment, the method further comprises storing in a memory a record of the one or more vouchers transmitted to the communications device, wherein in response to a further selection by said user of any of said advertising links, verifying in said memory whether said further selection corresponds to a digital voucher already downloaded, and if so, preventing a further download of said digital voucher to said communications device.

According to another embodiment, an identification value of said communications device is also stored in said memory in association with the record of said one or more transmitted vouchers, wherein said verifying step comprises verifying whether said further selection corresponds to a digital voucher already downloaded to a communications device having said identification value.

According to another embodiment, preventing a further download of said digital voucher comprises transmitting an error message to said communications device indicating that said voucher may not be downloaded more than once.

According to another embodiment, said user input is a search term, and wherein said advertising links are displayed in addition to search results relating to said search term.

According to another embodiment, identifying said digital vouchers comprises identifying, from a pool of available digital vouchers, the digital vouchers associated with said search term, to provide a plurality of downloadable relevant digital vouchers.

According to another embodiment, identifying said digital vouchers is based on a comparison of a bid price associated with each of said plurality of relevant digital vouchers.

According to another embodiment, said communications device comprises a positioning device, and wherein said step of identifying a plurality of digital vouchers comprising comparing position data provided by said positioning device with a geographical zone associated with each of said digital vouchers.

According to a further aspect of the present disclosure, there is provided a digital voucher distribution server comprising a processor adapted to: identify, based on a user input to a communications device, a plurality of digital vouchers; transmit, for display on said communications device, an advertising link to each of said plurality of digital vouchers; receive a selection by said user of one or more of said advertising links; and in response to said selection, transmit the digital vouchers corresponding to said selected links to said communications device.

According to one embodiment, the digital voucher distribution system further comprises a memory arranged to store a record of the one or more vouchers transmitted to the communications device, wherein said processor is further adapted to verify in said memory, in response to a further selection by said user of any of said advertising links, whether said further selection corresponds to a digital voucher already downloaded, and if so, to prevent a further download of said digital voucher to said communications device.

According to yet a further aspect of the present disclosure, there is provided a communications device comprising a processing unit adapted to: receive a user input, and to transmit the user input to a remote server; receive from said remote server, based on the user input, a plurality of advertising links associated with digital vouchers, and to display said links on a display of said communications device; receive a user selection of at least one of said links and request from said remote server the digital voucher corresponding to said at least one selected link; and receive from said remote server the requested digital voucher.

According to one embodiment, the communications device further comprises a memory arranged to store a record of the one or more vouchers received from said remote server, wherein said processing unit is further adapted to verify in said memory, in response to a further selection by said user of any of said advertising links, whether the corresponding digital voucher has already been downloaded, and if so, to prevent a further download of said digital voucher to said communications device.

According to another embodiment, the communications device further comprises a positioning device arranged to determine a position of the communications device, wherein said processing unit is adapted to transmit said position to said remote server with the user input.

According to another embodiment, said communications device is mobile wireless device.

According to yet a further aspect of the present disclosure, there is provided a digital voucher distribution system comprising the above server and the above communications device.

### BRIEF DESCRIPTION OF THE DRAWINGS

The foregoing and other purposes, features, aspects and advantages of the present disclosure will become apparent from the following detailed description of embodiments, given by way of illustration and not limitation with reference to the accompanying drawings, in which:
Figure 1 illustrates a voucher distribution system according to an embodiment of the present disclosure;
Figure 2 illustrates a digital voucher according to an embodiment of the present disclosure;
Figure 3 illustrates a mobile device of the digital voucher system of Figure 1 in more detail according to an embodiment of the present disclosure;
Figure 4 illustrates communications between a digital voucher server and a mobile device according to an embodiment of the present disclosure;
Figure 5 is a flow diagram illustrating steps in a method of voucher distribution according to an embodiment of the present disclosure;
Figure 6 illustrates a digital voucher server in more detail according to an embodiment of the present disclosure; and
Figure 7 is a flow diagram illustrating a method of voucher distribution according to a further embodiment of the present disclosure.

### DETAILED DESCRIPTION OF EMBODIMENTS OF THE PRESENT DISCLOSURE

According to the embodiments described herein, a mobile device is configured to permit user selection of digital vouchers. In particular, users may actively select and download vouchers that interest them onto their mobile telephones or other wireless communications devices. The vouchers are for example discount coupons or payment vouchers, which can be used when the user visits a merchant. Thus, rather than merely allowing vouchers to be sent to users by a service provider, the user actively searches for and selects the vouchers to be downloaded (a "pull" rather than a "push" scenario).

As an example, a user may perform a Google ® search on their mobile telephone for pizza restaurants in their vicinity. The GPS in the telephone provides the user's position, and a list of the closest restaurants will be displayed to the user. Additionally, in the advertising space around the search results, a number of vouchers will be displayed, each for example giving a certain discount at a certain pizza restaurant nearby. The user can then select one or more of the vouchers for download, and present them at the restaurants to obtain the corresponding discount.

An auction can, for example, be used to decide which, where and in what order the merchants' vouchers are to be displayed. For example, if two pizza restaurants are willing to pay 15 and 10 cents respectively to have their voucher displayed in response to a search for "pizza restaurant Chicago", the 15 cent bid will win, and this restaurant's voucher will be displayed in priority.

By knowing the ID, such as the MSISDN (mobile station international subscriber directory number) of the telephone, the downloaded vouchers can be monitored, and the system could block attempts to download a voucher twice, or the merchant system could simply refuse the second voucher.

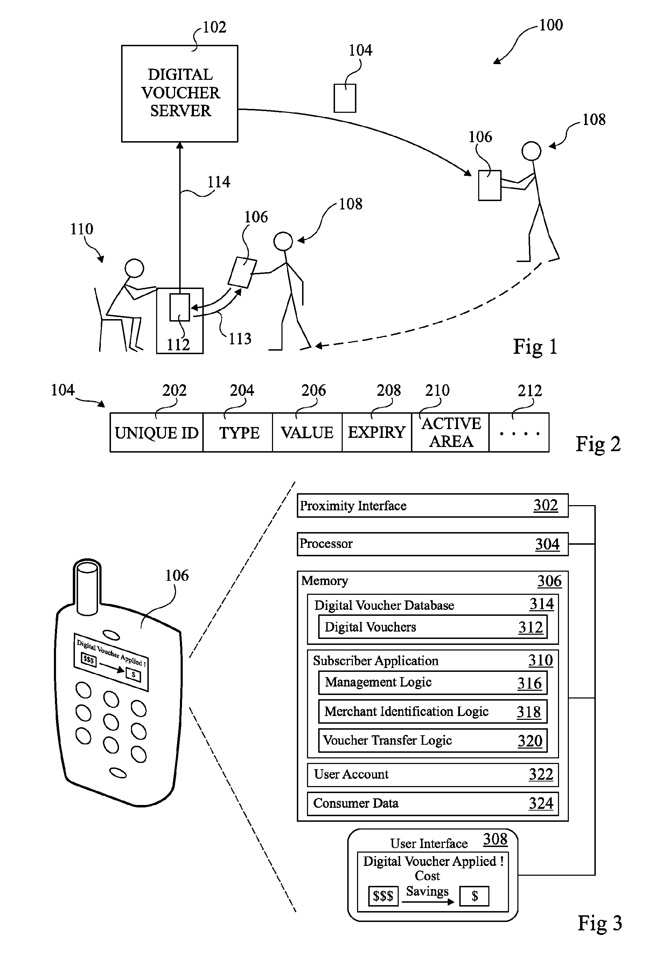

Figure 1 illustrates a voucher distribution system 100 comprising a digital voucher server 102, which distributes digital vouchers to users. For example, the digital voucher server 102 forms part of the mobile telecommunications network equipment that communicates with the mobile devices via the wireless network, or it could be an internet based server coupled to the mobile device 106 via the mobile network.

A digital voucher 104 is transmitted to the mobile device 106 of a user 108, and stored in a memory (not illustrated in Figure 1) of device 106. The user 108 may then immediately, or at a later time, visit a merchant, and apply the digital voucher to a purchase at the point of sale 110. For example, the merchant could be a retail store, restaurant, cinema or other commercial establishment. The user 108 may present the mobile device to a cashier to be validated. For example, an image corresponding to the digital voucher is displayed on a display (not shown in Figure 1) of the mobile device 106, to be visually verified by a cashier, or laser scanned in the case the image is a barcode or other machine readable image. Alternatively, the digital voucher could be automatically digitally accessed by point of sale equipment 112, via a two-way communications path 113, for example using near-field communications (NFC), Bluetooth, infrared or other communications standard. In all cases, a identifier of the digital voucher is for example input to the point of sale equipment 112, either manually by the cashier reading the display of the mobile device, or automatically.

The point of sale equipment 112 may store a database of the identifiers of issued vouchers, and the digital voucher stored on mobile device 106 can be validated by verifying that it is on the list of issued vouchers.

Once validated, the voucher can be applied to the transaction. The voucher value may form part of the digital voucher itself, or could be indicated in the database of issued vouchers stored by the merchant, such that the point of sale equipment automatically applies the voucher value to the transaction. For example the voucher is applied by reducing the final bill by a certain percentage or by a fixed value, or generating a credit that the user can redeem at a later date.

Once the transaction has been completed, the database of issued identifiers stored by the merchant can be updated to indicate that the digital voucher has already been used, preventing the same voucher from being presented more than once at the same merchant. Alternatively or additionally, in the case that the two-way communications path 113 is used to access the digital voucher, it may be deleted by the point of sale equipment 112 from the memory of the mobile device 106 to prevent it from being reused.

The point of sale equipment 112 may also communicate with the digital voucher server 102 via a communications path 114, for example corresponding to an SMS (short messaging service), MMS (multimedia messaging service) or wired or wireless internet connection, such that the server 102 can be informed that the voucher has been used.

Figure 2 illustrates an example of a digital voucher 104, for example formed of a fixed or variable number of data bits that may be stored by electronic storage devices such as in memories of the digital voucher server 102 and mobile device 106. The data bits may represent one or more values associated with the digital voucher, as will now be explained.

The digital voucher for example comprises a segment of bits 202 forming a unique identifier of the voucher. The length of this unique identifier for example depends on the number of vouchers that have been issued, but could for example be between 1 and 32 bytes long.

A following segment of bits 204 for example indicates a type of the voucher, and in particular whether the voucher is a discount voucher, payment voucher, or other type of voucher. For example, as an alternative to a discount or payment voucher, the type segment 204 may indicate that the voucher permits a certain number of unitary purchases or accesses, for example a certain number of single voyages in a transport system, entries to a cinema etc.

A following segment of bits 206 for example indicates the value of the voucher, which, depending on the type of voucher, could be expressed as a percentage discount, currency value, number of unitary purchases or accesses, etc.

A following segment 208 for example indicates an expiry date of the voucher, which could be anything from a few hours to a few years after its issue. As explained above, alternatively this information could be stored in a merchant voucher database.

A following segment 210 for example indicates an active area associated with the digital voucher, which for example allows the voucher to be automatically activated when the user enters a certain area. For example, the active area could be the boundaries of a town or village, or an area within a given radius around a merchant's premises, such as a retail store or restaurant.

The digital voucher may additionally or alternatively comprise other data values 112, such as data representing an image for use in validating the voucher, a voucher name, directions to the merchant premises, a phone number of the merchant, etc.

Figure 3 illustrates the mobile device 106 of Figure 1 in more detail according to one example.

The mobile device 106 is for example a cellular telephone, smartphone, digital camera, portable games console, or other mobile communication device.

The mobile device 106 comprises a proximity communication interface 302, a processor 304, a memory 306, and a display 308.

The memory 306 for example stores a digital voucher subscriber application 310 that aids a consumer using the device 300 in managing digital vouchers 312 stored on the memory and transferring them to merchants as part of a business transaction. The digital vouchers 312 are for example organized in a voucher database 314 stored on the memory 306. The subscriber application 310 may include digital voucher management logic 316, proximate merchant identification logic 318, and digital voucher transfer logic 320.

The digital voucher management logic 316 aids the device 106 in receiving and managing new digital vouchers. The device 106 may receive the digital vouchers by SMS or MMS message, email, or other type of communication from digital voucher server.

The digital voucher management logic 316 for example synchronizes a user account 322 stored in the memory 306 with a corresponding user account maintained by digital voucher server 102. Synchronization for example involves deleting from the mobile device 106 any digital vouchers that have been used, as indicated by the merchant point of sale equipment.

The digital vouchers 312 stored in memory 306 may be transferred as a string of bytes representing voucher data or parameters.

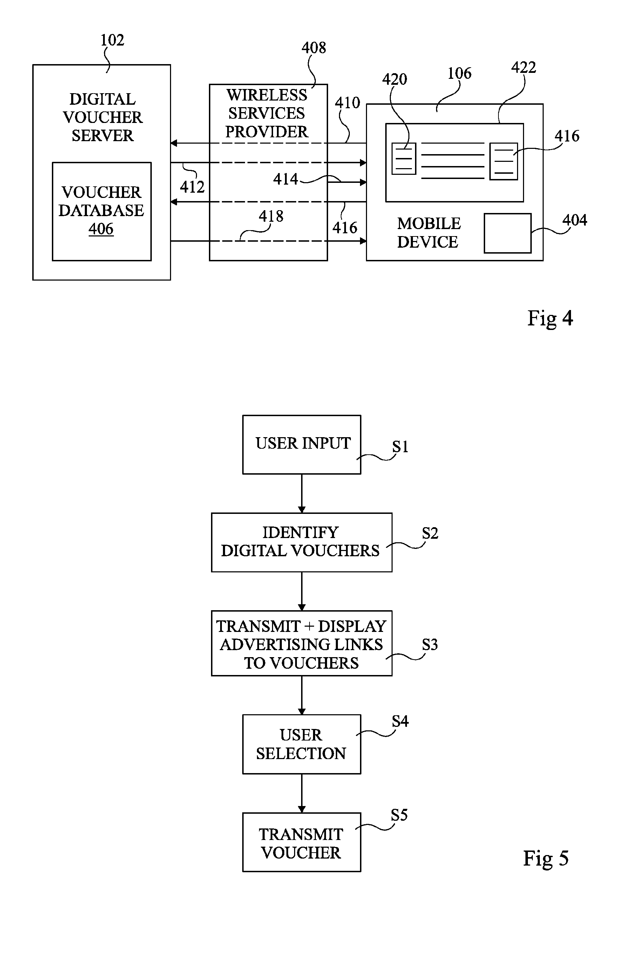

Figure 4 illustrates an example of communications between the digital voucher server 102 and the mobile device 106.

The mobile device 106 for example comprises a display 402, and positioning device 404, such as a GPS (global positioning system) and/or network aided positioning circuitry. The digital voucher server 102 for example comprises a voucher database 406, for example stored on one or more disk drives. The voucher database for example comprises, for each voucher, one or more of the following data:
- voucher data, including at least voucher identifier;
- merchant identifier;
- transmission zone;
- advertising link data; and
- bid price.

The voucher data for example corresponds to one or more of the fields illustrated in Figure 2.

The merchant identifier for example indicates the merchant or merchants at which the voucher may be used.

The transmission zone for example indicates a zone within which mobile devices are eligible to receive the voucher.

The advertising link data will be described in more detail below.

The bid price for example indicates a value that the merchant is willing to pay to have this voucher transmitted to a mobile device, as will be described in more detail below.

With reference again to Figure 4, a wireless services provider 408 for example provides a communications interface between the digital voucher server 102 and mobile device 106, and also provides other services to the mobile device, such as the routing of voice and/or video calls, internet access etc., according to any suitable network protocol, as will be well known to those skilled in the art.

A sequence of communications, represented by arrows 410, 412, 414, 416 and 418, between the digital voucher server 102, wireless services provider 408 and mobile device 106, will now be described with reference to the flow diagram of Figure 5.

In a first step S1 of Figure 5, the user of mobile device 106 for example makes an input that allows a subset of the digital vouchers stored in the database 406 to be identified. For example, the input is a search query regarding a particular product or service. Alternatively, the input could be a request for digital vouchers for merchants located near the current position of the mobile device. In that case, the request is for example accompanied by location data of the mobile device 106 as provided by the positioning device 404. The mobile device 106 for example comprises an input interface, which may be integrated into the display 402, or is a separate element of the device, for allowing a user to input the search query. The user input is transmitted, as represented by arrow 410 of Figure 4, to the digital voucher server 102 via the wireless services provider 408.

In second step S2 of the method of Figure 5, the digital voucher server 102 identifies, based on the user input, a plurality of digital vouchers. In particular, the digital voucher server extracts, from the voucher database 406, vouchers that for example relate to the searched subject, or correspond to a given region around the current location of the mobile device 106. As the example, if the user of mobile device 106 enters the query "Pizza restaurants", vouchers may be retrieved from the voucher database 406 that corresponds to discounts at Pizza restaurants, and in particular pizza restaurants that are located within a certain range of the mobile device. If more digital vouchers are returned than can be offered to the mobile device, the bidding price associated with each voucher is for example used in an automatic auction to decide which vouchers should be offered. In particular, the vouchers having the highest bid prices are for example selected.

In a next step S3, the digital voucher server 102 transmits to the mobile device 106, as shown by an arrow 412 of Figure 4, advertising links to the identified digital vouchers. For example, the advertising links may comprise image and/or video data and/or sound, and is for example transmitted via an HTTP internet connection or MMS to the mobile device. The link data for each advertising link is for example stored in the digital voucher database 406 in association with the corresponding digital voucher, as described above. In parallel, the wireless services provider 408 for example also transmits to the mobile device, as indicated by arrow 414, search results corresponding to the user input. For example, in the case that the user input was an internet search engine query, the wireless services provider for example not only forwards advertising links to the digital vouchers identified by the digital voucher server 102, but also transmits search results retrieved from the internet.

The advertising links and search results are displayed on the display of the mobile device 106. In particular, as represented by blocks 420 and 422 in Figure 4, certain zones of the display 402 are set aside for the display of advertising links, for example on either side of search results. The advertising links for example identify the vouchers that are available by indicating "10% off at Alpha Pizza's" or "click here to obtain your discount voucher".

In a next step S4 of Figure 5, the user makes the selection of one of the vouchers by selecting one of the corresponding advertising links. In particular, the user for example uses an input means of the mobile device 106 to address the corresponding portion of the display, or directly touches the corresponding portion of the display in the case that the display 402 is touch sensitive. In this way, the user indicates a desire to obtain the corresponding voucher, and this information is transmitted, as represented by arrow 416 in Figure 4, to the digital voucher server 102.

In a next step S5 of Figure 5, the digital voucher server 102 receives the user selection, and locates in the voucher database 406 the digital voucher corresponding to the user selection. This digital voucher is then transmitted, as illustrated by an arrow 420, to the mobile device 106.

The digital voucher is for example transmitted to the mobile device 106 using an HTTP structure or as a binary SMS using the UDH (user data header) port of the mobile device. For example, if the digital voucher includes an image, the metadata associated with the digital voucher image may be downloaded using an HTTP (HyperText Transfer Protocol) structure or by MMS. If the digital voucher is string of text data with no image, the digital voucher is for example transmitted using an HTTP structure or sent to the mobile device 106 by SMS, the SMS body including a string of values corresponding to the digital voucher.

At the mobile device 106, the voucher is for example stored in a memory, ready for a later use.

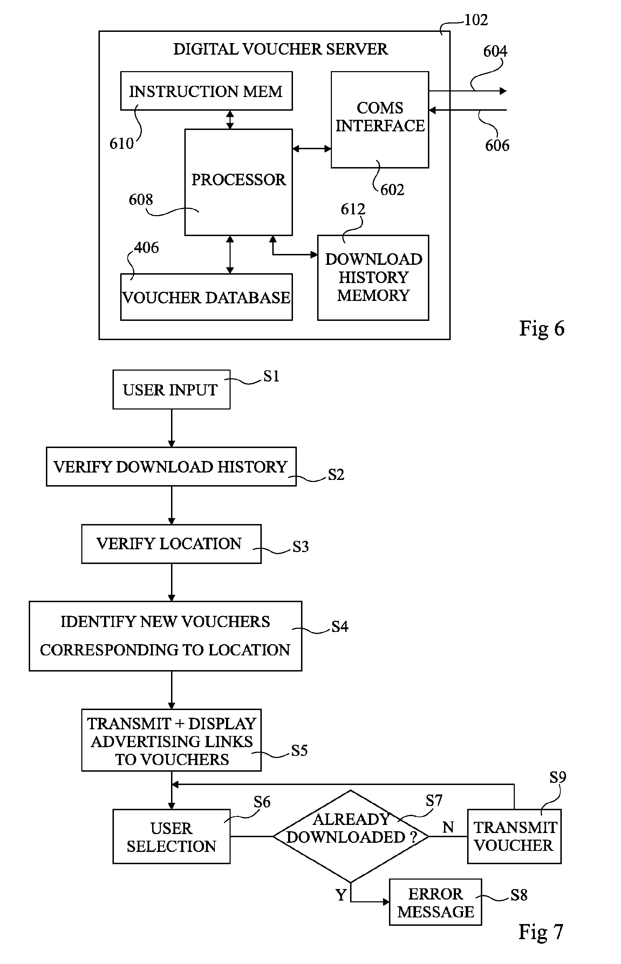

Figure 6 illustrates the digital voucher server 102 in more detail according to one example. The voucher server 102 for example comprises a mobile communications interface 602, which for example communicates via a transmission path 604 and a reception path 606 with one or more mobile devices, for example via wireless service providers or the like. The communications interface 602 is coupled to a processor 608, which is for example controlled by an instruction memory 610 such that the processor provides the functionality described herein below. The processor 608 is also coupled to the voucher database 406, and to a download history memory 612, as will now be explained with reference to Figure 7.

Figure 7 is a flow diagram illustrating steps of a method of distributing digital vouchers according to a further embodiment, based on the distribution server 102 of Figure 6.

In a first step S1, as with the method of Figure 5, a user input is made, which could be a search query or other request allowing a plurality of digital vouchers to be identified.

In a next step S2, the digital voucher server 102 receives the user input and verifies download history memory 612 in order to check which digital vouchers have already been downloaded by the mobile device 106. In particular, the mobile device is for example identified by its MSISDN (Mobile Station, International Subscriber, Directory Number), and the download history corresponding to the MSIDSN of the mobile device can thus be retrieved from memory 612.

In a next step S3, the location of the mobile device is verified, for example based on positioning data supplied by the mobile device with the user input. For example, the location data may be used not only to identify vouchers corresponding to merchants close to the mobile device, but certain vouchers may be geographically limited, meaning that they are only transmitted to mobile devices located in a certain zone, such as a particular town or country.

In a next step S4, digital vouchers that have not already been transmitted to the mobile device, as indicated by the download history 612, and validated based on the current location of the mobile device, are identified in the voucher database 406 of Figure 4.

In a next step S5, in a similar fashion to S3 of Figure 5, advertising links to the vouchers are transmitted from a digital voucher server 102 to the mobile device 106.

In a next step S6, the user makes a selection of one of the advertising links in a similar fashion to that described in relation to S4 of Figure 5, and this user selection is transmitted to the digital voucher server 102.

In a next step S7, it is verified by the digital voucher server 102 whether the voucher selected by the user has not already been downloaded by that user. In particular, the digital voucher server checks the download history 612 to verify whether a download of the selected voucher has already occurred. For example, a given user may be limited to downloading just one voucher for a particular merchant or promotion.

If in S7 it is determined that a voucher has already been downloaded, then in a next step S8, an error message is for example transmitted to the mobile device, indicating that they already have this voucher.

Alternatively, if no voucher has yet been downloaded, the next step is S9, in which the selected digital voucher is transmitted to the mobile device, and the download memory 612 is updated accordingly.

After S9, if the user selects another or the same advertising link, the method returns to S6, in which this new selection is again transmitted to the digital voucher server. Then, in S7, if the new selection corresponds to a digital voucher that has already been downloaded by the user, the error message of S8 will be transmitted.

An advantage of the methods and systems for distributing digital vouchers described herein is that, by providing digital vouchers following a user selection among a plurality of links, voucher distribution is simplified, and transmission of unwanted vouchers is avoided. This in turn leads to a reduction in the electronic traffic transmitted between the digital voucher server and the mobile device, thereby freeing communications bandwidth for other traffic.

Furthermore, by maintaining a download history in the digital voucher server, the transmission of a same voucher more than once can be avoided.

Having thus described illustrative embodiments of the disclosure, various alterations, modifications and improvements will readily occur to those skilled in the art.

For example, it will be apparent to those skilled in the art that while examples of voucher distribution to a single mobile device have been described, the same voucher distribution server can be adapted to distribute vouchers to any number of mobile devices.

Furthermore, the various features described in relation to the various embodiments can be combined in any combination.

## Claims

1. A method of distributing one or more digital vouchers to the communications device of a user comprising:
identifying, based on a user input to the communications device (106), a plurality of digital vouchers;
displaying on a display (402) of said communications device an advertising link to each of said plurality of digital vouchers; and
in response to a selection by said user of one or more of said advertising links, transmitting one or more digital vouchers corresponding to said selected links to said communications device.

2. The method of claim 1, further comprising, storing in a memory (612) a record of the one or more vouchers transmitted to the communications device (106), wherein in response to a further selection by said user of any of said advertising links, verifying in said memory whether said further selection corresponds to a digital voucher already downloaded, and if so, preventing a further download of said digital voucher to said communications device.

3. The method of claim 2, wherein an identification value of said communications device is also stored in said memory in association with the record of said one or more transmitted vouchers, wherein said verifying step comprises verifying whether said further selection corresponds to a digital voucher already downloaded to a communications device having said identification value.

4. The method of claim 2 or 3, wherein preventing a further download of said digital voucher comprises transmitting an error message to said communications device indicating that said voucher may not be downloaded more than once.

5. The method of any of claims 1 to 4, wherein said user input is a search term, and wherein said advertising links are displayed in addition to search results relating to said search term.

6. The method of claim 5, wherein identifying said digital vouchers comprises identifying, from a pool of available digital vouchers (406), the digital vouchers associated with said search term, to provide a plurality of downloadable relevant digital vouchers.

7. The method of claim 6, wherein identifying said digital vouchers is based on a comparison of a bid price associated with each of said plurality of relevant digital vouchers.

8. The method of claim 7, wherein said communications device comprises a positioning device, and wherein said step of identifying a plurality of digital vouchers comprising comparing position data provided by said positioning device with a geographical zone associated with each of said digital vouchers.

9. A digital voucher distribution server comprising a processor (608) adapted to:
identify, based on a user input to a communications device (106), a plurality of digital vouchers;
transmit, for display on said communications device, an advertising link to each of said plurality of digital vouchers;
receive a selection by said user of one or more of said advertising links; and
in response to said selection, transmit the digital vouchers corresponding to said selected links to said communications device.

10. The digital voucher distribution system of claim 9, further comprising a memory arranged to store a record of the one or more vouchers transmitted to the communications device, wherein said processor is further adapted to verify in said memory, in response to a further selection by said user of any of said advertising links, whether said further selection corresponds to a digital voucher already downloaded, and if so, to prevent a further download of said digital voucher to said communications device.

11. A communications device comprising a processing unit adapted to:
receive a user input, and to transmit the user input to a remote server (102);
receive from said remote server, based on the user input, a plurality of advertising links associated with digital vouchers, and to display said links on a display of said communications device;
receive a user selection of at least one of said links and request from said remote server the digital voucher corresponding to said at least one selected link; and
receive from said remote server the requested digital voucher.

12. The communications device of claim 11, further comprising a memory (612) arranged to store a record of the one or more vouchers received from said remote server, wherein said processing unit is further adapted to verify in said memory, in response to a further selection by said user of any of said advertising links, whether the corresponding digital voucher has already been downloaded, and if so, to prevent a further download of said digital voucher to said communications device.

13. The communications device of claim 11 or 12, further comprising a positioning device (404) arranged to determine a position of the communications device, wherein said processing unit is adapted to transmit said position to said remote server with the user input.

14. The communications device of any of claims 11 to 13, wherein said communications device is mobile wireless device.

15. A digital voucher distribution system comprising the server of claim 9 or 10 and the communications device of any of claims 11 to 14.
